(19) **Europäisches Patentamt / European Patent Office / Office européen des brevets**

(11) **EP 3 035 595 A1**

(12) **EUROPEAN PATENT APPLICATION**

(43) Date of publication:
22.06.2016 Bulletin 2016/25

(51) Int Cl.:
*H04L 12/24* (2006.01)         *H04L 12/28* (2006.01)
*G06F 17/30* (2006.01)

(21) Application number: **14307059.7**

(22) Date of filing: **17.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventor: **Noirie, Ludovic**
**91620 Nozay (FR)**

(74) Representative: **Berthier, Karine et al**
**Alcatel-Lucent International**
**148/152, route de la Reine**
**92100 Boulogne-Billancourt (FR)**

Remarks:
Amended claims in accordance with Rule 137(2) EPC.

(54) **Routable distributed database for managing a plurality of entities of a telecommunication network**

(57) A routable distributed database for a telecommunication network (ISPN) comprising a plurality of nodes (N#A, N#B, N#C, N#D, N#E) respectively associated to local data bases (DBA, DBB, DBC, DBD, DBE) comprises management functionalities for managing a plurality of entities (COij) of said network, some of these local data bases (DBA, DBB, DBC, DBD) storing some information about the entities.

The management functionalities (COMF) are configured for:

- grouping entities in a given community (CoCO#X);
- storing first information about this given community (CoCO#X) in the respective local databases (DBA, DBB, DBC, DBD) of a plurality of nodes (N#A, N#B, N#C, N#D),
- storing second information, in the respective local databases (DBA, DBB, DBC, DBD) of a plurality of nodes (N#A, N#B, N#C, N#D), this second information enabling any node, that accesses to some second information in the local data base (DBA) of a first node (N#A), to access then to the local database (DBB) of a second node (N#B).

Fig. 2

EP 3 035 595 A1

**Description**

BACKGROUND OF THE INVENTION

Field of the invention

The present invention generally relates to a routable distributed database that can be used for the implementation of a huge database within a large scale telecommunication network, e. g. an Internet Service Provider (ISP) network.

One of the problems that an ISP is facing is that most of its customers (end users) do not have the skills to correctly manage their home networks. To solve this problem, the ISP can offer to them a new service in which it manages their home networks, i.e. it takes the control of these home networks. One key aspect of this service would be to manage a knowledge database related to the **connected objects (CO)** of all the home networks that are managed by the ISP.

A generic definition of a CO could be: A connected object is an entity that can generate, receive or impact data flows carried by a network. The COs may be real objects (e.g. home gateway, router, personal computer, tablet, camera, sensor,...) or virtual objects (e.g. virtual machine on a personal computer, application running on a personal computer, content files stored on a hard disk,...).

Management of the end users' home networks by an ISP could be the next step after the current evolution of the ISPs towards the virtualization of Home Gateways.

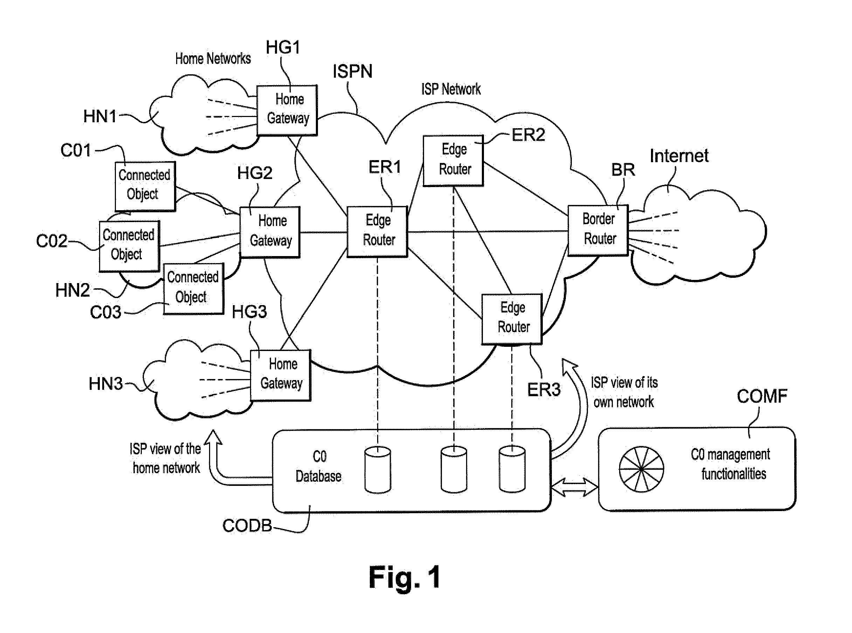

**Figure 1** is the high level block diagram of a first exemplary routable distributed database that may be contemplated for managing all the objects connected to an ISP network. It comprises:

- a first exemplary ISP network ISPN comprising a connected object data base CODB for managing all the connected objects connected to the home networks HN1, HN2, HN3.
- Exemplary home networks HN1, HN2, HN3 comprising connected objects; for instance the home network HN2 comprises connected objects CO1, CO2, CO3;

Each home network HN1, HN2, HN3 respectively comprises a home gateway HGW1, HGW2, HGG3; and each home gateway of a home network is connected to all the connected objects of this home network. For instance the home gateway HG2 of the home network HN2 is connected to all the connected objects CO1, CO2, CO3 that belong to the home network HN2.

The ISP network ISPN comprises:

- A plurality of edge routers ER1, ER2, ER3 for routing data packets according to the Internet Protocol;
- a border router BR for connecting this ISP network ISPN to the Internet,
- the CO data base CODB,
- and CO management functionalities COMF connected to the CO database CODB.

The connected object data base CODB stores information about all the COs, this information being provided by the edge routers ER1, ER2, ER3. Via the CO management functionalities COMF of the connected object data base CODB, the ISP has a view of:

- its own network ISPN;
- all the home networks HN1, HN2, HN3;
- and all the COs of all the home networks HN1, HN2, HN3.

Description of the prior art

The use of a classical centralized architecture for implementing this CO database CODB is impossible because the number of COs is huge in an ISP network. A centralized database would not work because of the large scale of the network and the number of entities to be managed in the database. The solution to get a scalable database in such a context is to distribute it within the network in several nodes (e.g. edge routers, but other network nodes may be used) in order to obtain a distributed database. The document [OV2011] T. Özsu and P. Valduriez, Principles of Distributed Database Systems, 3rd edition, 2011, http://link.springer.com/book/10.1007%2F978-1-4419-8834-8 describes such a distributed database.

To handle all the information about all the COs of all home networks of the ISP network ISPN, the database CODB must contain a relation in which the key is the CO identifier and the other attributes are the elements that are required to manage each CO. These attributes may be pointers to other relations that are out of the scope of the description here (e.g., type of CO pointing to the characteristics specific to this type, owner of the CO, etc.).

There are two problems to be solved:

1. How to distribute the information of this relation, about COs, in different nodes of the ISP network ISPN.
2. How to reach the nodes containing the information one is looking for.

The solution to the first problem is straightforward. It is sufficient to horizontally fragment any relation R_CO about COs. The document [OV2011, §3.2.2 & §3.3] teaches that the ISP should locate the information about a CO in the node closest to this CO. This horizontal fragmentation has the right properties: completeness, reconstruction and disjointness [OV2011, §3.2.4]. Using the distributed database formalism, horizontal fragmentation could be modeled with the derived horizontal fragmentation in which the member relation R_CO is linked to the owner relation R_node that describes the association of each CO with its closest node: A resulting piece of database R_CO_i, is located in a node #i, and is then the equi-join between R_CO and R_node_i, where R_node_i is the result of the selection of the elements of R_node related to the node #i.

The second problem has presently no satisfactory solution. The existing solutions that can be contemplated are:

- A general solution described by the document [OV2011, §3.5], wherein a data dictionary/directory/catalog/index stores information on how the database is organized and used. This directory is itself a database that contains metadata, and thus it could be considered as part of the database. It could be global or local (distributed). Nothing is said about the practical implementation. One cannot derive, from it, a solution for the second problem.

- According to the description of peer-to-peer networks by the document [OV2011, §16], if one wants to get some information that may be in several peers, the solutions that are usually proposed are the following:

   -- Either you we have a centralized index/directory, like in some peer-to-peer networks, which must be consulted (or caches of it, with all the caching management issues). Scalability and communication efficiency issues arise from such a solution.
   -- Or you have a distributed index/directory, like in some other peer-to-peer networks. For searching information, a node must flood messages to all, or part, of its neighbors. Full flooding is not scalable for large networks. Partial flooding uses methods that either do not guarantee to get the information, or are not scalable (because of time to live, random walk, ...).

- A web search engine, described by the document [OV2011, §17]: one node receives a list of answers that corresponds to a given request.
- Data management in the Cloud, described in the document [OV2011, §18.2]: one node manages data distributed over a lot of different servers.

These known solutions cannot be used for huge networks because they are not really scalable.

In addition, also note that one must relax the disjointness rule for the relation that will serve in the routing process, in order to have information in each edge router about the other edge routers to be contacted to reach COs. Thus another drawback of the classical distributed databases fragmentation process is that it usually enforces this disjointness rule strictly.

So none of the classical distributed databases is satisfactory for implementing a connected object database for a huge network.

The aim of the invention is to propose a distributed database enabling to reach the nodes containing the information one is looking for, within a large scale telecommunication network, for instance a CO database for an ISP network, i.e. that provides a simple and efficient process to find a CO, or several ones, having some given characteristics, within this ISP network.

This can be solved by applying, the routable distributed data base according to the invention.

## SUMMARY OF THE INVENTION

The object of the invention is a routable distributed database for a telecommunication network comprising a plurality of nodes respectively associated to local data bases; said routable distributed database comprising management functionalities for managing a plurality of entities of said network, some of these local data bases storing some information about the entities;
characterized in that said management functionalities are configured for:

- grouping entities in a given community;
- storing first information about this given community in the respective local databases of a plurality of nodes,
- storing second information, in the respective local databases of a plurality of nodes, this second information enabling any node, that accesses to some second information in the local data base of a first node, to access then to the local database of a second node.

Thanks to this second information defining a graph structure linking all the nodes wherein the local database stores some first information, it is possible to quickly access to the whole first information about a given community, even if it is in a huge network, because a node generally does not need to multicast a request message to access another node wherein the local data base stores at least a part of this first information.

Another object of the invention is a node for implementing the method according to the invention.

Other features and advantages of the present invention will become more apparent from the following detailed description of embodiments of the present invention, when taken in conjunction with the accompanying drawings.

## BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:

- Figure 1 (described above) is the high level block diagram of a first exemplary routable distributed database that may be contemplated for managing all the objects connected to an ISP network.
- Figure 2 is a block diagram of a second exemplary routable distributed database, according to the invention, for managing all the objects connected to an ISP network.
- Figures 3 to 6 illustrate four trees that are defined for a same set of nodes of the second exemplary routable distributed database represented on figure 2.

<u>DETAILED DESCRIPTION OF A PREFERRED EMBODIMENT</u>

According to the invention, the management functionalities of the routable distributed database are configured for grouping the COs into **Communities of Connected Object (CoCOs).** For making routable a distributed data base storing information about a community CoCO#X constituted of a plurality of CO, the basic idea of the invention, consists in adding a new relation R_routing into a database that associates the identifiers "#X" to the nodes wherein the respective local data bases "have some knowledge about the community CoCO#X", for all the identifiers #X, i.e.:

- Each local data base that has at least one element of relation R_CoCO corresponding to CoCO#X is a piece of the routable distributed database (the corresponding nodes are called "managers" of the COs belonging to the community CoCO #X).
- Possibly some additional nodes that will relay messages to other nodes without having any element of relation R_CoCO corresponding to the community CoCO #X in their respective local data bases (they are only "routing node" or "proxies").

The key of the relation R_routing is the couple (CoCO# identifier, Node identifier) wherein "node identifier" is the identifier of a node "having some knowledge on the community CoCO#". There are possibly other additional attributes in the relation R_routing, that are out of the scope of the invention.

In any case, the relation R_routing is used to know about nodes "having knowledge about the community CoCO#X" and to forward messages to them. In the proposed embodiment, each local data base "having knowledge about the community CoCO #X" has the following entries for the relation R_routing:

- The one corresponding to itself (to check that it has knowledge about the community CoCO#X when receiving messages).
- The ones corresponding to its logical neighbors, to whom it can forward messages corresponding to the community CoCO#X.

Note that this definition of R_routing verifies the completeness and reconstruction rules of fragmentation, but not the disjointness (According to the document [OV2011, §3.2.4]). The disjointness rule says that it is required, for routing purposes, that the entries are partly duplicated, even in the tree structure option (A node with two or more neighbors has its entry duplicated in at least all these two neighbors). So one must relax the disjointness rule: The redundancy elimination rule that is usually performed in distributed data bases, must not be performed on the R_routing relation.

The relation R_routing encodes the graph structure of the nodes corresponding to each CoCO. It enables a hop-by-hop message forwarding process. It is important to have in mind that the graph structure may change from a CoCO to another one, even if the same nodes are concerned. In the following, the corresponding graphs (in our example, trees) may have different masters/roots and different branches/links.

Once a node "having knowledge about the CoCO #X" is reached, and a request message is delivered to the community manager, of the community CoCO#X, attached to this node, this community manager should process as follows:

1. It processes received messages according to this knowledge and according to what the message requests (i.e., identification of a given type of CO within this CO, identification of all the COs, selection of one or few COs, etc).

2. When it must forward a message, it generally does not use multicast (it may be used only for some recurrent sub-trees in the graph structure, but one can avoid it). Then a forwarding manager should use some IPv6 unicast addresses handled by the managers of the CoCO #X in its neighbor nodes. In some ways, the node extracts from the message (header or payload), the information that the concerned CoCO is the one identified by the identifier X; and it stores it. For instance, the source IPv6 address of the forwarded message is the IPv6 address of a forwarding manager. This source address enables the manager of the neighbor node to know that the message comes from this forwarding manager. This avoid that the manager of the neighbor node sends it back to the forwarding manager in the hop-by-hop message forwarding process.

There are several options to perform this forwarding process from a forwarding manager to a neighbor manager:

1. Either the message explicitly contains the identifier X in it: e.g. in packet encapsulation, or in a modification of the payload (as this managing process is performed above the IP network layer and can be seen as an application layer "CoCO management application". So the neighbor manager knows that it concerns the community CoCO#X.

2. Or the message explicitly contains an IPv6 destination address X' that uniquely corresponds to the community CoCO#X, defined in a way that is similar to what we defined for the root node. The neighbor manager implicitly knows that it concerns CoCO#X because it has the information, in its local database, that the identifier CoCO#X' is an alias of CoCO#X. This option will not increase too much the number of CoCO identifiers to be handled in a given node, because a given CoCO will have a maximum of two identifiers in a given node, the global one X and eventually a single alias X'.

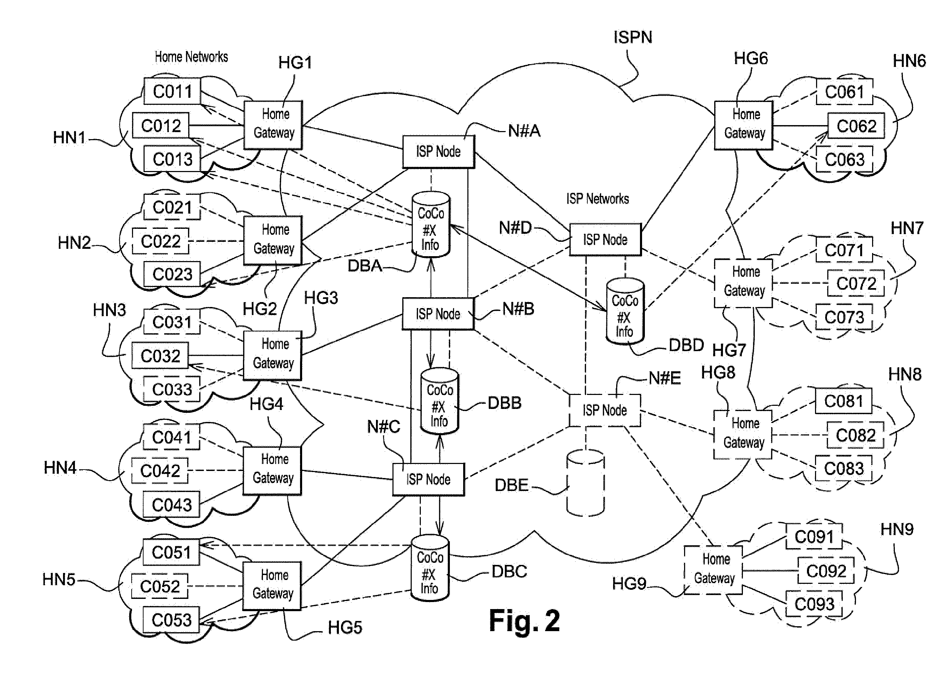

The exemplary ISP network ISPN represented on **Figure 2** is connected by home gateways HG1, ..., GH9, respectively to exemplary home networks HN1, ..., HN9.

In this example, each home network HNi comprises three connected objects COij, for i=1 to 3 and j = 1 to 9. All the connected objects COij of these home networks are managed by means of an embodiment of the routable distributed data base according to the invention. This embodiment is distributed in a plurality of nodes of the ISP network ISPN: N#A, N#B, N#C, N#D, N#E. Each of these nodes N#A, N#B, N#C, N#D, N#E respectively comprises, or is connected to, a local data base DBA, DBB, DBC, DBD, DBE, which together constitute the routable distributed database and its management functionalities.

This embodiment further comprises management functionalities that are distributed in the local data bases DBA, DBB, DBC, DBD, DBE; and are not represented on Figure 2.

According to the invention, the management functionalities of the routable distributed database are configured for grouping the COs into Communities of Connected Object (CoCOs): a CoCO is a group of COs within the ISP network ISPN, including managed home networks HN1, ..., HN9. The COs belonging to a given community have something in common, i.e. anything interesting to be managed by the ISP.

A CO may belong to a plurality of CoCOs.

Some practical examples of CoCOs:

- CoCO grouping all the COs of one given home network, for the management of this home network by the ISP.
- CoCO grouping all the COs of a few home networks belonging to a same user or family, but in different locations, for management of these home networks as a virtual single home network by the ISP (Application to users with different locations, or merge of several home networks belonging to same family).
- CoCO grouping COs being external temperature sensors of a given type, in different home networks for getting a fined-grained map of the temperatures in a region, or a country.
- CoCO grouping public photo (or video) files of all the users on some given topics, for sharing photos (or videos) between the users of the ISP.

Etc...

Here are some CoCOs which can be interesting for an ISP:

- One CoCO per home network, grouping all the COs of the home network.
- A few CoCOs per home network, each CoCO grouping COs with some specific characteristics, e.g.:

-- One CoCO per type of object: Home Gateways, Cameras, TV displays, PCs,...
-- One CoCO per access authorization: private, public, semi-public (to a limited audience) within a given home network, per home network, per user, and per group of users (e.g., parents, children,...).

The set of CoCOs within an ISP network is potentially large. For example, an ISP that needs to manage 10 million home networks, each comprising on average ten COs has a total of N = 100 million COs. Then the size of all the possible CoCOs is $2^N \sim 10^{(3.10^7)}$, which is not possible to manage. But most of these potential CoCOs are useless for the management of home networks by the ISP.

Finally, the number of CoCOs handled by a given edge router and that should be managed is in the order of maybe hundred times the number of home networks managed by this edge router (i.e. about one hundred CoCOs per home network). This number must be multiplied by the number of edge routers in the ISP network. In total, the number of CoCOs should be in the order of hundred times the total number of home networks in the ISP network. For our example of one million home networks, this gives $\sim 10^9$ CoCOs.

Using the routable distributed data according to the invention, if these ten million home networks are managed by 100 edge routers (with about 100 000 home networks per edge router), this gives $\sim$ C x 10M CoCOs per database with one database per edge router, where C is the average value of the number of databases having knowledge on some CoCOs. Most of the CoCOs will concern a single N = 100 million COs, few ones will spread over a significant part of the ISP network, so maybe C$\sim$2, which gives $\sim 2.10^7$ CoCOs per local database.

In the example represented on **Figure 2,** four local data bases DBA, DBB, DBC, DBD store information about an exemplary CoCO, referenced CoCO#X on this Figure 2. The local database DBE of the node N#E does not store any information about this community CoCO#X.

In this example, when some entity of the network needs to retrieve all the information about all the COs of the community CoCO#X, it must access all the four nodes A, B, C, D. Therefore the objective of the routable data base is then to enable access to these four nodes A, B, C, D.

**-1) Grouping CoCOs in a community:**

According to the invention, the management functionalities of the routable distributed database are configured for grouping COs so that the COs belonging to this community have a same characteristic in common. In this example, the exemplary community CoCO#X comprises the following COs:

> CO11, CO12, CO13, CO23, CO32, CO43, CO51, CO53, CO62.

These COs are represented by solid rectangles. The COs that do not belong to this CoCO are represented by dashed rectangles.

The information about the connected objects CO11, CO12, CO13 and CO23 is stored in the database DBA of the node N#A.

The information about the connected object CO32 is stored in the database BDB of the node N#B.

The information about the connected objects CO43, CO51, CO53 is stored in the database DBC of the node N#C.

The information about the connected object CO62 is stored in the database DBD of the node N#D.

In the following description, we will distinguish **"first information"** pertaining to the COs that are members of a given CoCO and corresponding to the R_CoCO relation, and **"second information"** pertaining to the routing of a request message for accessing all the nodes wherein the respective local data bases store some first information about a given community, i.e. information pertaining to the COs that are members of this community, corresponding to the R_routing relation.

**2) Storing first information about a given community CoCO#X:**

The management functionalities of the routable distributed database are configured for storing first information about the COs of this community CoCO#X into some of the local data bases constituting the routable distributed database: In the example represented on **Figure 2,** the local data bases DBA, DBB, DBC, DBD store information about the COs constituting the community referenced CoCO#X, whereas the local database DBE of the node N# E does not store any information about this community CoCO#X.

The first information about the connected objects CO12, CO12, CO13 and CO23 is stored in the database DBA of the node N#A that is logically the "nearest" node to these COs.

The first information about the connected object CO32 is stored in the database DBB of the node N#B that is logically the "nearest" node to these COs.

The first information about the connected objects CO43, CO51, CO33 is stored in the database DBC of the node N#C that is logically the "nearest" node to these COs.

The first information about the connected object CO62 is stored in the database DBD of the node N#D that is logically the "nearest" node to these COs.

**- 3) Storing second information enabling to access all the information about a given community Co-CO#X:**

The management functionalities of the routable distributed database are configured for storing second information in the local databases DBA, DBB, DBC, DBD, of the nodes A, B, C, D, in this example. This second information enables each of the nodes A, B, C, D to access at least another one of these nodes wherein the local database also stores some first information and/or second information about this community CoCO#X.

This second information is generally stored in association with first information about this given community CoCO#X, if any first information is stored there. However, in some particular cases, the local data base may contain second information only. In this latter case, the node acts as a proxy. When it receives a request message for retrieving first information about the COs of a CoCO, it uses the locally stored second information for forwarding this request message to another node.

In some other particular cases, the local data base may contain first information only, i.e. it is not possible to fetch more information in a further node, because the considered node is at an end of a graph structure.

In all cases, the whole second information, stored in all the nodes wherein the local database stores some second information about this given community CoCO#X, defines a graph structure linking all these nodes. Reading the second information stored along this graph structure enables to access, node by node, the whole first information about the given community Co-CO#X. This graph structure enables to quickly access to the first information about a given community, even with a huge network, because a node generally does not need to multicast a request message to access a node wherein the local data base stores this first information.

The second information is about the relation R_routing. For the CoCO #X, each entry of this relation has the identifier #X as key and the identifier (e.g., IP address) of the node to be reach to forward messages, in our example, N#A, N#B, N#C or N#D. So each second information piece is made of two parts: the identifier of the CoCO#X and the identifier of a node to be reached to access some COs belonging to CoCO#X.

For the forwarding process of messages concerning CoCO #X, the CoCO identifier may be carried in different ways:

- According to a first embodiment, the message explicitly contains the CoCO identifier part of the second information in it (e.g., packet encapsulation, or modification of the payload as this managing process is performed above the IP network layer and can be seen as an application layer).
- According to a second and preferred embodiment, the CoCO identifier part of the second information is simply a network address (e.g., IPv6) or an identifier made from this network address that is used as destination address of the message. This network address is within the address space of one of the nodes having knowledge about the CoCO (in our example, N#A, N#B, N#C or N#D), e.g., an IPv6 address that has an IPv6 prefix managed by this node like defined in IETF RFC 3587. This allows a node not having knowledge about the CoCO (node N#E in our example) to forward the packet using this network address, so the message will reach a node knowing about the CoCO.

According to this second embodiment, the management functionalities of the routable distributed database are configured for assigning a community identifier that is an injective function that associate to the CoCO a unique network address belonging to the address space of a node having knowledge about the CoCO, i.e., wherein the local database stores some second information about this community. Thanks to this community identifier anyone can retrieve information about said CoCO via the node having an address space corresponding to this community identifier; i.e. this node is addressed by means of this community identifier. In particular, this community identifier enables to retrieve some first information and / or second information about said community, in the local database of the node indirectly designated by this community identifier.

The community identifier of the community CoCO#X is generated by an injective function f:

$$A' = f(X)$$

For instance f = Identity. In this case, the management functionalities of the routable distributed database may use the identifier of any one of the nodes having a part of the first information about a given community CoCO#X, for building a CoCO identifier for this community CoCO#X (e.g. this identifier is referenced IP_CoCO#X if IPv4/v6 is used for addressing these nodes).

In the example represented on **Figure 2,** the information about the community CoCO#X is stored in the local databases DBA, DBB, DBC, DBD.

Except for the nodes that are ends of the graph structure, each of these local databases DBA, DBB, DBC, DBD stores second information possibly in association with some first information, about the community CoCO#X. Except for the nodes that are ends of the graph structure, this second information enables each of the nodes A, B, C, D to access at least another one of these nodes A, B, C, D storing information about this community CoCO#X. The whole second information stored in the local data bases DBA, DBB, DBC, DBD defines a graph structure linking all the nodes A, B, C, D wherein a local database stores some information about this community CoCO#X. This graph structure is preferably a tree for avoiding loops.

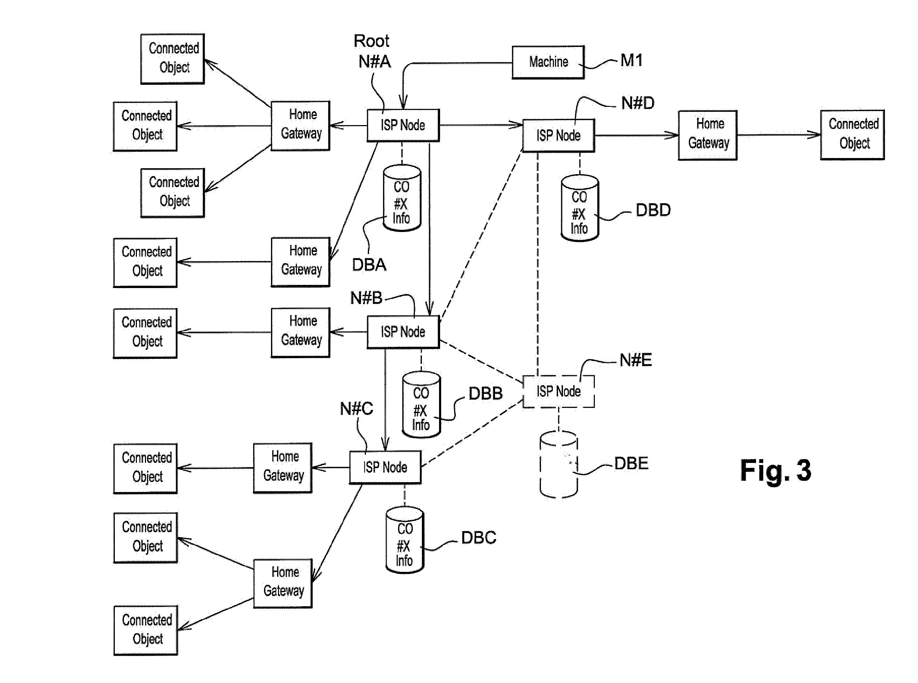

**Figures 3 to 6** illustrate four exemplary trees that are defined for a same set of nodes A, B, C, D of the second exemplary routable distributed database represented on figure 2.

In the example of **Figure 3,** a machine M1 (for instance a personal computer) sends a request message to the node N#A to obtain information about the community CoCO#X. The node N#A is then the root of a tree. The local data base DBA of the node N#A stores some first information and some second information about the community CoCO#X. The node n#A responds to the machine M1 by sending this first information that is only a part of the information about the COs of the community CoCO#X. The node N#A forwards the request message to another node (or several nodes) (physically or logically neighboring the node N#A) designated by this second information, in order to get more information about the community CoCO#X. The second information designates the nodes N#B and N#D. So it forwards the request message to the nodes N#B and N#D.

In the figure 3 the node N#B and N#D are physical neighbors of node N#A. These node may be not physically neighboring the node #A, for example one may have a node N#F (not represented on the figure) between nodes N#A and N#B, so the message sent by node #A will go through node N#F without any processing concerning the CoCO database management before reaching the destination node N#B.

The local data base DBB of the node N#B stores some first information and some second information about the community CoCO#X. The node N#B responds to the machine M1 by sending this first information that is only a part of the information about the COs of the community CoCO#X. The node N#B forwards the request message to another node (physically or logically neighboring the node N#B) designated by this second information, in order to get more information about the community CoCO#X. The second information designates the nodes N#C.

The local data base DBC of the node N#B stores some first information, but no some second information about the community CoCO#X. The node N#C responds to the machine M1 by sending this first information that is only a part of the information about the COs of the community CoCO#X. The node N#C does not forward the request message to another node. It is the end of a branch of the tree.

The node N#D is the end of a second branch, in this example. The local data base DBD of the node N#D stores some first information, but no some second information about the community CoCO#X. The node N#D responds to the machine M1 by sending this first information that is only a part of the information about the COs of the community CoCO#X. The node N#D does not forward the request message to another node; it is the end of a branch of the tree.

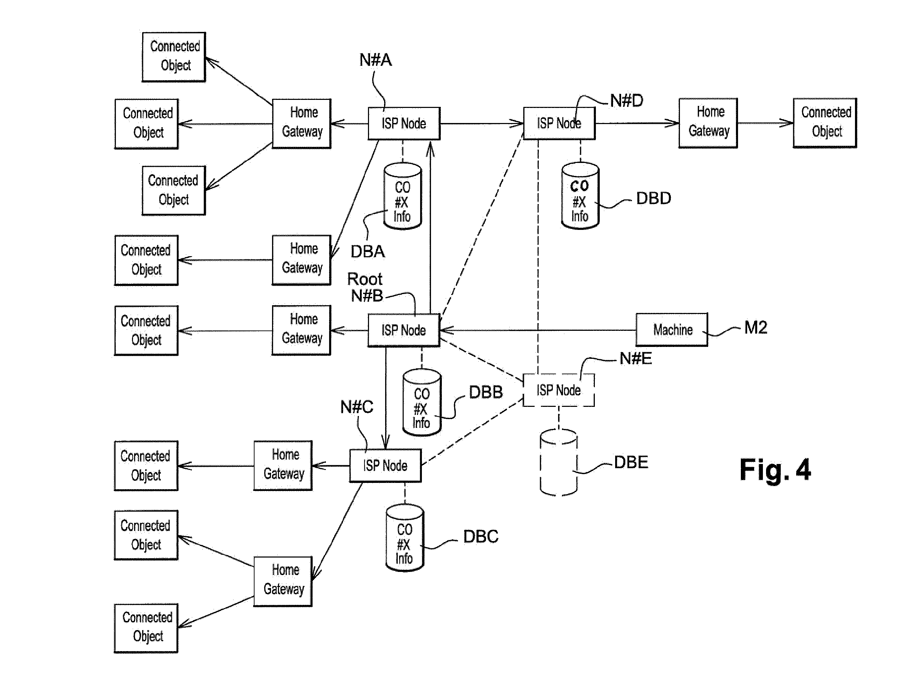

In the example of **Figure 4,** a machine M2 (for instance a personal computer) sends a request message to the node N#B to obtain information about the community CoCO#X. The node N#B is then the root of a tree. The local data base DBB of the node N#B stores some first information and some second information about the community CoCO#X. The node N#B responds to the machine M2 by sending this first information that is only a part of the information about the COs of the community CoCO#X. The node N#B forwards the request message to another (or several) node (physically or logically neighboring the node N#B) designated by this second information, in order to get more information about the community CoCO#X. The second information designates the nodes N#A and N#C.

So it forwards the request message to the nodes N#A and N#C.

Like with figure 3, one may have some intermediate nodes not represented on figure 4 that will just forward the packets without processing any information concerning the CoCO database. The local data base DBA of the node N#A stores some first information and some second information about the community Co-CO#X. The node N#A responds to the machine M2 by sending this first information that is only a part of the information about the COs of the community CoCO#X. The node N#A forwards the request message to another node (physically or logically neighboring the node N#A) designated by this second information, in order to get more information about the community CoCO#X. The second information designates the nodes N#D.

The local data base DBD of the node N#B stores some first information, but no some second information about the community CoCO#X. The node N#D responds to the machine M2 by sending this first information that is only a part of the information about the COs of the community CoCO#X. The node N#D does not forward the request message to another node; it is the end of a branch of the tree.

The node N#C is the end of a second branch, in this example. The local data base DBD of the node N#D stores some first information, but no some second information about the community CoCO#X. The node N#D responds to the machine M2 by sending this first information that is only a part of the information about the COs of the community CoCO#X. The node N#D does not forward the request message to another node since it is the end of a branch of the tree.

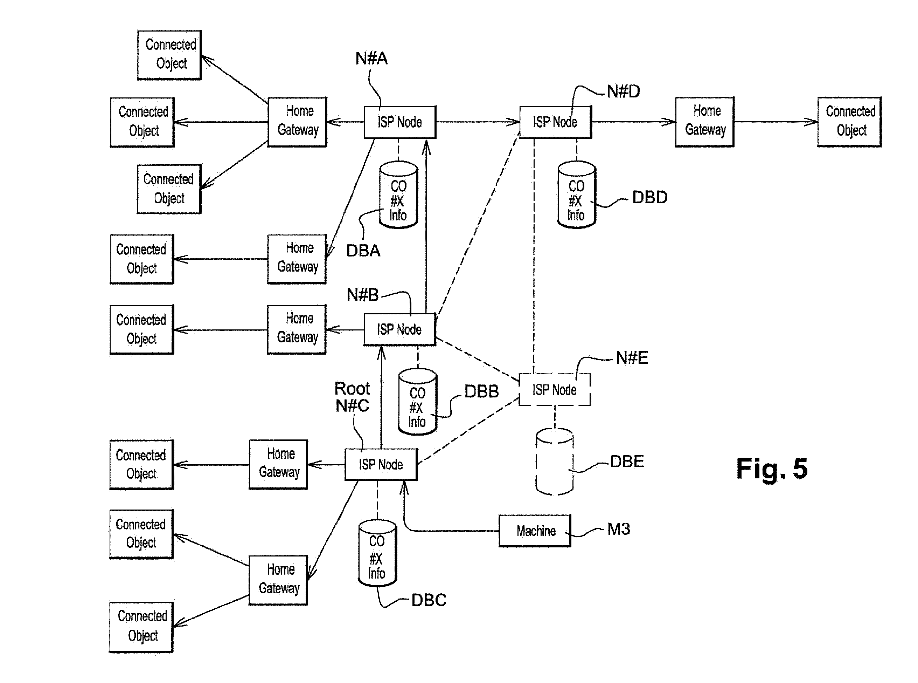

In the example of **Figure 5,** a machine M3 (for instance a personal computer) sends a request message to the node N#C to obtain information about the community CoCO#X. The node N#C is then the root of a tree. The local data base DBC of the node N#C stores some first information and some second information about the community CoCO#X. The node N#C responds to the machine M3 by sending this first information that is only a part of the information about the COs of the community CoCO#X. The node N#C forwards the request message to another node (or several nodes) (physically or logically neighboring the node N#C) designated by this second information, in order to get more information about the community CoCO#X. The second information designates the nodes N#B. So it forwards the request message to the node N#B.

Like with figure 3 and 4, one may have some intermediate nodes not represented on figure 5 that will just forward the packets without processing any information concerning the CoCO database.

The local data base DBB of the node N#B stores some first information and some second information about the community CoCO#X. The node N#B responds to the machine M3 by sending this first information that is only a part of the information about the COs of the community CoCO#X. The node N#B forwards the request message to another node (physically or logically neighboring the node N#B) designated by this second information, in order to get more information about the community CoCO#X. The second information designates the node N#A.

The local data base DBA of the node N#A stores some first information, but no some second information about the community CoCO#X. The node N#A responds to the machine M3 by sending this first information that is only a part of the information about the COs of the community CoCO#X. The node N#A forwards the request message the node N#D. It is the end of the tree that has a single branch. The node N#D is the end of a second branch, in this example. The local data base DBD of the node N#D stores some first information, but no some second information about the community Co-CO#X. The node N#D responds to the machine M3 by sending this first information that is only a part of the information about the COs of the community CoCO#X. The node N#D does not forward the request message to another node; it is the end of a branch of the tree.

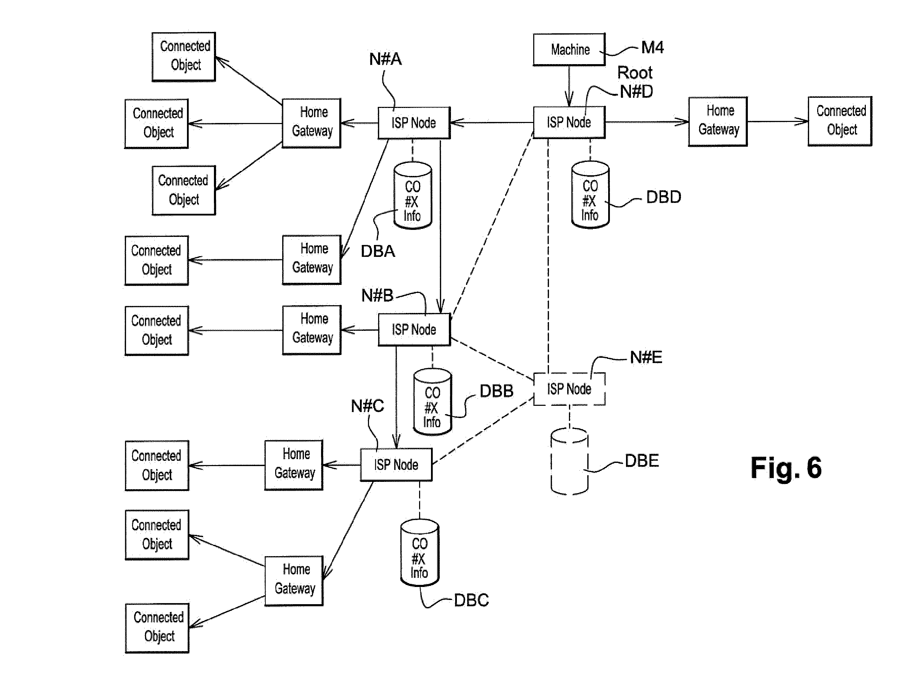

In the example of **Figure 6,** a machine M4 (for instance a personal computer) sends a request message to the node N#D to obtain information about the community CoCO#X. The node N#D is then the root of a tree. The local data base DBD of the node N#D stores some first information and some second information about the community CoCO#X. The node N#D responds to the machine M4 by sending this first information that is only a part of the information about the COs of the community CoCO#X. The node N#D forwards the request message to another node (or several nodes) (physically or logically neighboring the node N#D) designated by this second information, in order to get more information about the community CoCO#X. The second information designates the nodes N#A. So it forwards the request message to the node N#A.

Like with figure 3, 4 and 5, one may have some intermediate nodes not represented on figure 4 that will just forward the packets without processing any information concerning the CoCO database.

The local data base DBA of the node N#A stores some first information and some second information about the community CoCO#X. The node N#A responds to the machine M4 by sending this first information that is only a part of the information about the COs of the community CoCO#X. The node N#A forwards the request message to another node (physically or logically neighboring the node N#A) designated by this second information, in order to get more information about the community CoCO#X. The second information designates the nodes N#B. The local data base DBB of the node N#B stores some first information and some second information about the community CoCO#X. The node N#B responds to the machine M4 by sending this first information that is only a part of the information about the COs of the community CoCO#X. The node N#B forwards the request message to another node (physically or logically neighboring the node N#B) designated by this second information, in order to get more information about the community CoCO#X. The second information designates the nodes N#C.

The local data base DBC of the node N#C stores some first information, but no some second information about the community CoCO#X. The node N#C responds to the machine M4 by sending this first information that is only a part of the information about the COs of the community CoCO#X. The node N#C does not forward the request message to another node; it is the end of a branch of the tree.

## 4) Protection against the failures

The routable distributed data base according to the invention must be protected against the failure of a node wherein the local data stores information about a CoCO. The management functionalities are configured **for handling possible failure** of a first node wherein the local database stores some information about a community, by storing third information in all the local databases storing second information for accessing to this first node, this third information enabling anyone to access to a second node among the nodes wherein a local data base stores information about this community.

There may be other use cases of the data base according to the invention: one should simply replace the COs by other entities that will be managed in the database, and replace the Internet service supplier by another entity that manages the network.

The advantages of this new routable distributed database with respect to the best existing solution that one could derive from classical Distributed DataBases are the following:

1. Intrinsic self-routing of messages towards the part of the routable distributed database that has information relevant to the message content.
2. Multicasting of messages towards the relevant nodes without requiring IP multicat addressing, if the Internet protocol is used.
3. Enabler to optimize the localisation of the Internet service supplier management database information, by localizing the information about COs and CoCOs in the Internet service supplier nodes that are the closest to these CO and CoCOs.
4. Same scalability as for a classical distributed data base (i.e. advantageous if compared to a centralized data base).

## Claims

1. A routable distributed database for a telecommunication network (ISPN) comprising a plurality of nodes (N#A, N#B, N#C, N#D, N#E) respectively associated to local data bases (DBA, DBB, DBC, DBD, DBE); said routable distributed database comprising management functionalities for managing a plurality of entities (COij) of said network, some of these local data bases (DBA, DBB, DBC, DBD) storing some information about the entities;
   **characterized in that** said management functionalities (COMF) are configured for:

   - grouping entities in a given community (CoCO#X);
   - storing first information about this given community (CoCO#X) in the respective local databases (DBA, DBB, DBC, DBD) of a plurality of nodes (N#A, N#B, N#C, N#D),
   - storing second information, in the respective local databases (DBA, DBB, DBC, DBD) of a plurality of nodes (N#A, N#B, N#C, N#D), this second information enabling any node, that accesses to some second information in the local data base (DBA) of a first node (N#A), to access then to the local database (DBB) of a second node (N#B).

2. A routable distributed database according to claim 1, wherein said management functionalities are configured for providing second information defining a graph structure linking all the nodes (N#A, N#B, N#C, N#D) wherein the respective local databases (DBA, DBB, DBC, DBD) store some first and/or second information, without any loop.

**3.** A routable distributed database according to claim 1, wherein said management functionalities are configured for assigning a community identifier to this community, this community identifier being given by an injective function in the node address space of one of the nodes (N#A, N#B, N#C, N#D) wherein the local database stores some information about this community, so that anyone can access some information about said community via the node having the node address space corresponding to this community identifier by said injective function; the second information defining a graph structure linking all the nodes (N#A, N#B, N#C, N#D) wherein a local database (DBA, DBB, DBC, DBD) stores some information, without any loop.

**4.** A routable distributed database according to claim 3, wherein said community identifier is an address enabling to access one of the nodes (N#A, N#B, N#C, N#D) wherein the local database stores some information about this community.

**5.** A routable distributed database according to claim 3, wherein said community identifier comprises an address to reach one of the nodes (N#A, N#B, N#C, N#D) wherein the local database stores some information about this community.

**6.** A routable distributed database according to claim 1, wherein said management functionalities are configured for handling possible failure of a first node wherein the local database stores some information about a community, by storing third information in all the local databases storing second information for accessing to this first node, this third information enabling anyone to access to a second node among the nodes wherein a local data base stores information about this community.

**7.** **A node** (N#A) of a telecommunication network (ISPN) comprising a local data bases (DBA) that is capable of being part of a routable distributed database comprising a plurality of local data bases (DBA, DBB, DBC, DBD, DBE) respectively located in a plurality of nodes (N#A, N#B, N#C, N#D, N#E), **characterized in that** the local data base of said node comprises management functionalities that are configured for:

- storing first information about a community (CoCO#X) of entities (COij) of said network;
- and storing second information enabling any node to access at least another node (N#B).

**8.** A node (N#A) of a telecommunication network (ISPN) according to claims 7, comprising management functionalities that are configured for generating second information that defines a graph structure linking all the nodes (N#A, N#B, N#C, N#D) wherein the respective local databases (DBB, DBC) are also parts of said routable distributed database, without any loop.

**9.** A node according to claim 7, comprising management functionalities that are configured for assigning a community identifier to a community of entities, this identifier being given by an injective function in the node address space of one of the nodes (N#A, N#B, N#C, N#D) wherein the local database stores some first information about this community, so that anyone can access some first information about said community via the node having the node identifier corresponding to this community identifier by said injective function.

**10.** A node according to claim 9, comprising management functionalities that are configured for assigning a community identifier that is an address enabling to access one of the nodes (N#A, N#B, N#C, N#D) wherein the local database stores some information about this community.

**11.** A node according to claim 9, comprising management functionalities that are configured for assigning a community identifier comprising an address to reach one of the nodes (N#A, N#B, N#C, N#D) wherein the local database stores some information about this community.

**12.** A node according to claim 7, comprising management functionalities that are configured for storing, in the local data base (LBA) third information enabling this node to access a second node among the nodes wherein a local data base stores information about this community, for accessing this second node if the first node has a failure.

**Amended claims in accordance with Rule 137(2) EPC.**

**1.** A routable distributed database for a telecommunication network (ISPN) comprising a plurality of nodes (N#A, N#B, N#C, N#D, N#E) respectively associated to local data bases (DBA, DBB, DBC, DBD, DBE); said routable distributed database comprising management functionalities for managing a plurality of entities (COij) connected to nodes of said network, some of these local data bases (DBA, DBB, DBC, DBD) storing some first information about the entities, and some of these local data bases (DBA, DBB, DBC, DBD) storing second information about the entities;
**characterized in that** said management functionalities (COMF) are configured for:

- grouping entities in a given community (CoCO#X);
- storing first information, pertaining to the entities that are members of this given community (CoCO#X), in the respective local databases (DBA, DBB, DBC, DBD) of some nodes (N#A, N#B, N#C, N#D)of said plurality of nodes (N#A, N#B, N#C, N#D, N#E),
- storing second information, pertaining to the entities that are members of this given community (CoCO#X), in association with first information pertaining to the entities that are members of this given community (CoCO#X), in the respective local databases (DBA, DBB, DBC, DBD) of at least the nodes (N#A, N#B, N#C, N#D) storing some first information, this second information enabling any node, that accesses to the second information stored in the local data base (DBA) of a first node (N#A), to access then to the local database (DBB) of a second node (N#B), designated by the accessed second information, this second node storing first information, pertaining to the entities that are members of this given community (CoCO#X).

2. A routable distributed database according to claim 1, wherein said management functionalities are configured for providing second information defining a graph structure linking all the nodes (N#A, N#B, N#C, N#D) wherein the respective local databases (DBA, DBB, DBC, DBD) store some first and/or second information, without any loop.

3. A routable distributed database according to claim 1, wherein said management functionalities are configured for assigning a community identifier to this community, this community identifier being given by an injective function in the node address space of one of the nodes (N#A, N#B, N#C, N#D) wherein the local database stores some information about this community, so that anyone can access some information about said community via the node having the node address space corresponding to this community identifier by said injective function; the second information defining a graph structure linking all the nodes (N#A, N#B, N#C, N#D) wherein a local database (DBA, DBB, DBC, DBD) stores some information, without any loop.

4. A routable distributed database according to claim 3, wherein said community identifier is an address enabling to access one of the nodes (N#A, N#B, N#C, N#D) wherein the local database stores some information about this community.

5. A routable distributed database according to claim 3, wherein said community identifier comprises an address to reach one of the nodes (N#A, N#B, N#C, N#D) wherein the local database stores some information about this community.

6. A routable distributed database according to claim 1, wherein said management functionalities are configured for handling possible failure of a first node wherein the local database stores some information about a community, by storing third information in all the local databases storing second information for accessing to this first node, this third information enabling anyone to access to a second node among the nodes wherein a local data base stores information about this community.

7. **A node** (N#A) of a telecommunication network (ISPN) comprising a local data bases (DBA) that is part of a routable distributed database comprising a plurality of local data bases (DBA, DBB, DBC, DBD, DBE) respectively located in a plurality of nodes (N#A, N#B, N#C, N#D, N#E),
**characterized in that** the local data base of said node comprises management functionalities that are configured for:

- storing first information about a community (CoCO#X) of entities (COij) of said network, each of said entities being connected to a node of said network, and said first information pertaining to the entities that are members of this given community;
- and storing second information pertaining to the entities that are members of this given community (CoCO#X), in association with first information pertaining to the entities that are members of this given community (CoCO#X), in the respective local databases (DBA, DBB, DBC, DBD) of said plurality of nodes (N#A, N#B, N#C, N#D), this second information enabling any node, that accesses to some second information in the local data base (DBA) of said node (N#A), to access then to the local database (DBB) of a second node (N#B) storing first and /or second information pertaining to the entities that are members of this given community (CoCO#X).

8. A node (N#A) of a telecommunication network (ISPN) according to claims 7, comprising management functionalities that are configured for generating second information that defines a graph structure linking all the nodes (N#A, N#B, N#C, N#D) wherein the respective local databases (DBB, DBC) are also parts of said routable distributed database, without any loop.

9. A node according to claim 7, comprising management functionalities that are configured for assigning a community identifier to a community of entities, this identifier being given by an injective function in the node address space of one of the nodes (N#A, N#B, N#C, N#D) wherein the local database stores some first information about this community, so that anyone can access some first information about said community via the node having the node identifier corresponding to this community identifier by said injective function.

10. A node according to claim 9, comprising management functionalities that are configured for assigning a community identifier that is an address enabling to access one of the nodes (N#A, N#B, N#C, N#D) wherein the local database stores some information about this community.

11. A node according to claim 9, comprising management functionalities that are configured for assigning a community identifier comprising an address to reach one of the nodes (N#A, N#B, N#C, N#D) wherein the local database stores some information about this community.

12. A node according to claim 7, comprising management functionalities that are configured for storing, in the local data base (LBA) third information enabling this node to access a second node among the nodes wherein a local data base stores information about this community, for accessing this second node if the first node has a failure.

Fig. 1

**Fig. 2**

Connected
Object

Connected
Object

Connected
Object

Home
Gateway

Root
N#A

ISP Node

Machine M1

N#D

ISP Node

Home
Gateway

Connected
Object

CO
#X
Info

DBA

CO
#X
Info

DBD

Connected
Object

Home
Gateway

Connected
Object

Home
Gateway

N#B

ISP Node

N#E

ISP Node

Connected
Object

Home
Gateway

N#C

ISP Node

CO
#X
Info

DBB

CO
#X
Info

DBC

DBE

Connected
Object

Connected
Object

Home
Gateway

Fig. 3

Fig. 4

Fig. 5

EP 3 035 595 A1

Fig. 6

Europäisches
Patentamt

European
Patent Office

Office européen
des brevets

# EUROPEAN SEARCH REPORT

**Application Number**

EP 14 30 7059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/099787 A1 (BONNER BRETT B [US] ET AL) 25 July 2002 (2002-07-25) * the whole document * ----- | 1-12 | INV. H04L12/24 H04L12/28 G06F17/30 |
| A | US 2014/279902 A1 (HATTORI MASAKAZU [JP]) 18 September 2014 (2014-09-18) * the whole document * ----- | 1-12 | |
| A | WO 02/30050 A1 (LINMOR TECHNOLOGIES INC [CA]; CHRISTENSEN LOREN [CA]) 11 April 2002 (2002-04-11) * the whole document * ----- | 1-12 | |

**TECHNICAL FIELDS SEARCHED (IPC)**

H04L
G06F

The present search report has been drawn up for all claims

| Place of search | Date of completion of the search | Examiner |
|---|---|---|
| The Hague | 20 May 2015 | Aura Marcos, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                     
& : member of the same patent family, corresponding document

EPO FORM 1503 03.82 (P04C01)

## EP 3 035 595 A1

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2015

| Patent document cited in search report | | | Publication date | Patent family member(s) | | | Publication date |
|---|---|---|---|---|---|---|---|
| US 2002099787 | A1 | | 25-07-2002 | NONE | | | |
| US 2014279902 | A1 | | 18-09-2014 | AU | 2013381504 | A1 | 12-02-2015 |
| | | | | CN | 104185841 | A | 03-12-2014 |
| | | | | JP | 5698865 | B2 | 08-04-2015 |
| | | | | US | 2014279902 | A1 | 18-09-2014 |
| | | | | WO | 2014141393 | A1 | 18-09-2014 |
| WO 0230050 | A1 | | 11-04-2002 | AU | 5811601 | A | 15-04-2002 |
| | | | | CA | 2345292 | A1 | 03-04-2002 |
| | | | | GB | 2383228 | A | 18-06-2003 |
| | | | | WO | 0230050 | A1 | 11-04-2002 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. ÖZSU ; P. VALDURIEZ.** Principles of Distributed Database Systems. 2011